# EUROPÄISCHE PATENTSCHRIFT

(11) **EP 3 020 546 B1**
(45) Veröffentlichungstag und Bekanntmachung des Hinweises auf die Patenterteilung: **09.01.2019**
(21) Anmeldenummer: 15003230.8
(22) Anmeldetag: 12.11.2015
(51) Int. Cl.: B32B 5/18, B32B 15/04, B32B 21/04, B32B 27/08, B32B 3/12

(54) **LEICHTBAU-FORMTEIL IN SANDWICH-BAUWEISE UND VERFAHREN ZU DESSEN HERSTELLUNG**
LIGHTWEIGHT MOULDED PART WITH A SANDWICH DESIGN AND METHOD FOR PRODUCING THE SAME
PIECE MOULEE DE CONSTRUCTION LEGERE EN SANDWICH ET SON PROCEDE DE FABRICATION

(30) Priorität: 12.11.2014 DE 102014016744
(43) Veröffentlichungstag der Anmeldung: 18.05.2016
(73) Patentinhaber: Stengele, Erwin, 88353 Kisslegg (DE)
(72) Erfinder: Dorn, Helmut, 88353 Kisslegg (DE)
(74) Vertreter: Riebling, Peter

(56) Entgegenhaltungen:
- DE-A1- 2 939 877
- US-A1- 2011 135 862

## Beschreibung

Die Erfindung betrifft ein Formteil für die Verwendung im Leichtbau in Sandwich-Bauweise nach dem Oberbegriff des Patentanspruches 1 und ein Verfahren zu dessen Herstellung nach dem Patentanspruch 10.

Derartige Leichtbau-Formteile in Sandwich-Bauweise werden vornehmlich für Möbelteile im Fahrzeugbau eingesetzt, insbesondere für Möbelteile bei Wohnwagen und Reisemobilen.

Die Erfindung ist hierauf jedoch nicht beschränkt. Solche Leichtbau-Formteile können deshalb auch für sämtliche Land-, Wasser- und Luftfahrzeuge verwendet werden, bei denen ein möglichst geringes Flächengewicht erzielt werden soll.

Es ist bekannt, dass Leichtbau-Formteile in gebogener oder gerader Form herzustellen, so dass es z. B. möglich ist, gebogene oder gerade Frontplatten an Möbeln in Land-, Wasser- und Luftfahrzeugen herzustellen, die über zugeordnete Beschläge am Möbelkorpus befestigt sind.

Bei der Herstellung derartiger Leichtbau-Formteile, die insbesondere als Klappen, Frontteile, Möbelkorpusse, Abdeckungen und dergleichen bei Land-, Wasser- und Luftfahrzeugen verwendet werden, besteht das Problem, dass es zur Befestigung von Beschlägen an der Leichtbau-Formplatte notwendig ist, im Innenraum der Leichtbau-Formplatte eine sogenannte Einlage anzuordnen.

Diese Einlage ist ein tragendes Element, welches z. B. aus einer Holzplatte, einer Spanplatte oder einem anderen Holzwerkstoff besteht. Zur Anbringung von Beschlägen ist es ferner bekannt, dass die Beschlagaufnahmebohrung in dem Bereich der Leichtbau-Formplatte angebracht wird, in dem die tragende Einlage angeordnet ist. Auf diese Weise soll sichergestellt werden, dass das Beschlagteil lastübertragend an der Leichtbau-Formplatte befestigt ist.

Das tragende Innenteil oder die tragende Einlage soll demnach zur Lastübertragung von daran befestigten Beschlägen und dergleichen dienen.

Nachteil dieser bekannten Befestigung ist jedoch, dass das im Zwischenraum zwischen den beiden, die Sandwichplatte ausbildenden Deckplatten einliegende Einlageteil das Flächengewicht in unerwünschter Weise erhöht.

Auch die Einbringung derartiger, das Flächengewicht erhöhender Einlagen, die aus einem relativ schweren Holzwerkstoff bestehen, ist aufwendig.

Die US 2011/0135862 A1 zeigt ein Leichtbau-Formteil in Sandwich-Bauweise, bei dem eine Sandwich-Platte aus zwei zueinander parallelen Deckplatten besteht, zwischen denen mindestens teilweise eine nicht tragende Mittellage angeordnet ist, wobei sich die nicht tragende Mittellage bis zu den Längskanten der Sandwich-Platte über deren gesamten Fläche hinweg erstreckt.

Diese Druckschrift zeigt nicht, dass ein oder mehrere Aufnahmebohrungen für die Last übertragende Befestigung von Beschlägen oder dergleichen im Bereich der Deckplatten angeordnet sind und dass die Aufnahmebohrungen durch Dübel gebildet sind, welche Last übertragend mit den beiden Deckplatten verbunden sind.

Die einzigen Teile, die Last übertragend mit den Deckplatten verbunden sind, sind in Figur 32 mit dem Bezugszeichen 83 bezeichnete doppel-T-förmige Einlageschienen, die Einlageteile bilden.

Die Druckschrift offenbart demnach nur ein schienenartiges Einlegeteil zwischen den zueinander parallelen Deckplatten, nicht jedoch eine Anzahl von punktweise vorhandenen Dübeln, welche die Funktion des Einlegeteils übernehmen, jedoch nur punktweise vorhanden sind und deshalb als Last übertragende Befestigung für die Schrauben von Beschlägen geeignet sind.

Mit dem Gegenstand der US 2011/0135862 A1 ist eine Sandwichplatte nach dem Oberbegriff des Patentanspruches 1 bekannt geworden, bei der die nichttragende Mittellage im Spritzgussverfahren als Schaumkörper zwischen zwei im Abstand voneinander angeordneten Decklagen eingespritzt wird. Beim Einspritzen der Mittellage, bestehend aus einem aushärtbaren Schaumkörper, werden Füllkerne in der Spritzgussform verwendet, die dafür sorgen, dass die Mittellage zwischen den Lagen durchgehende Aufnahmebohrungen ausbilden, die als Dübelöffnung verwendet werden können.

Nachteil dieser Anordnung ist das schwierige Einbringen der Mittellage im Kunststoffspritzgussprozess und weiterer Nachteil ist, dass solche Dübelbohrungen in der Mittellage nur in einem bestimmten Rastermaß angeordnet sind und dazwischen positionierte Dübelbohrungen, die außerhalb des Rastermaßes liegen, nicht möglich sind.

Die Sandwichplatte wird im Übrigen durch ein in sich vollständig geschlossenes Profil ausgebildet, in dessen Hohlraum die im Spritzgussverfahren eingebrachte Mittellage eingebracht wird. Damit besteht der Nachteil, dass die Stirnseiten geschlossen sind und die Herstellung einer solchen Sandwichplatte in einem Durchlaufprozess, bei dem die Stirnseiten erst nachträglich geschlossen werden, nicht möglich ist.

Mit der DE 29 39 877 A1 ist eine weitere Sandwich-Verbundplatte bekannt geworden, bei der die Außenschalen aus einem hochwertigen Feinbeton bestehen, und zwischen den beiden Außenschalen handelsübliche steife Isolierplatten in beliebiger Stärke eingesetzt sind. Die Einbringung eines Dübels in einen solchen Aufbau ist nicht vorgesehen, vielmehr sind die beiden aus Feinbeton bestehenden Außenschalen durch Verbindungsanker miteinander verbunden.

Mit der DE 10 2005 060 528 A1 ist ein Verfahren zum Befestigen eines Einsatzkörpers in einer Leichtbauplatte bekannt geworden, bei dem die Leichtbauplatte aus einer oberen Deckschicht, einer unteren Deckschicht und einem dazwischen liegenden Füllmaterial besteht, welches Füllmaterial beispielsweise als Wabenkonstruktion ausgebildet sein kann.

Um mechanische Komponenten, wie z. B. Beschlagteile von Möbeln in der Leichtbauplatte zu verankern, wird vorgeschlagen, einen Einsatzkörper von oben in eine geeignete Öffnung in der oberen Decklage in die Leichtbauplatte einzusetzen und mit Hilfe einer Ultraschallsonotrode den Einsatzkörper in die Leichtbauplatte hinein zu verschieben und unter Aufschmelzung eines thermoplastischen Materials die obere Deckschicht mit der unteren Deckschicht über den Einsatzkörper zu verbinden. Er bildet demnach eine tragende Versteifung zwischen den beiden Decklagen.

Nachteil der Anordnung ist, dass keine besonderen Maßnahmen für die randseitige Verbindung der beiden Decklagen vorgesehen sind. Daher besteht die Gefahr, dass bei fehlender Versteifung der randseitigen Verbindung der Decklagen die so hergestellte Sandwichplatte im Randbereich labil und leicht zusammendrückbar ist.

Zwar schlägt die EP 2 342 067 B1 vor, dass bei einer Leichtbauplatte die randseitige Verbindung durch eine profilierte Kantenstütze erfolgt, die mit ihren profilierten Stirnseiten in den Stirnseiten der Decklagen verankert wird.

Voraussetzung ist allerdings, dass die Decklagen ein dem Profil der Kantenstütze angepasstes Profil aufweisen müssen oder in sich so verformbar sind, dass sich das Profil der Kantenstütze in das Stirnseitenprofil der Decklagen eingraben kann. Dies setzt allerdings leicht verformbare, geschichtete Decklagen voraus.

Weiterer Nachteil ist, dass je nach der Dicke der verwendeten Leichtbauplatte eine an das Dickenprofil der Leichtbauplatte angepasste Kantenstütze verwendet werden muss. Die Kantenstütze ist dabei ein separates Teil, welches stets mit unterschiedlichen Abmessungen vorgehalten werden muss, um unterschiedlich dicke Leichtbauplatten randseitig zu schließen.

Der Erfindung liegt deshalb ausgehend von der DE 10 2005 060 528 A1 die Aufgabe zugrunde, ein Leichtbau-Formteil in Sandwich-Bauweise dergestalt weiterzubilden, dass ein hochlastübertragender, randseitiger Abschluss zwischen den Deckplatten mit einem geeigneten Abdeckprofil erreicht werden kann.

Zur Lösung der gestellten Aufgabe ist die Erfindung durch die technische Lehre des Anspruches 1 gekennzeichnet.
Vorteil der Erfindung ist, dass eine solche Leichtbau-Sandwich-Platte im kostengünstigen Durchlaufverfahren hergestellt werden kann und ein lastübertragendes Abdeckprofil zum Schließen der stirnseitigen Kante aus dem Material der Deckplatte gebildet wird.

Bei einer Sandwich-Platte, die aus zwei zueinander parallelen Deckplatten besteht, zwischen denen eine nicht-tragende Mittellage angeordnet ist, erstreckt sich die nicht-tragende Mittellage bis zu den Längskanten der Sandwich-Platte über deren gesamten Fläche hinweg gesehen, so dass der gesamte Zwischenraum der Sandwich-Platte durch eine nicht-tragende Mittellage ausgefüllt ist. Die gewichtserhöhenden Einlagen entfallen somit.

Es ist vorgesehen, dass zur Befestigung von Beschlägen mindestens ein Dübel verwendet wird und dass bei der Verwendung von mehreren Dübeln jeder Dübel die Mittellage durchgreift und mit seinen Außenflächen mit den beiden, voneinander beabstandeten Decklagen verbunden ist.

Es wird die Verbindung zwischen den beiden gegenüberliegenden und zueinander parallelen Deckplatten nicht durch Einlageteile gebildet, sondern sofort durch punktweise über die Fläche der Deckplatten verteilt angeordnete Dübel, die den Vorteil haben, dass sie gleichzeitig Befestigungsmittel für eine Last übertragende Befestigung von Beschlägen oder dergleichen bilden.

Ein Dübel ist ein in der Verbindungstechnik gebrauchtes Bauteil. Er wird bei Werkstoffen angewendet, in die sich eine Schraube nicht unmittelbar eindrehen lässt. Ursprünglich wurde unter einem Dübel lediglich der noch im Zimmerei- und Tischlergewerbe gebrauchte Holzdübel verstanden. Mitunter wird zur Unterscheidung von letzterem der Begriff Schraubdübel benutzt, der auch Gegenstand der Erfindung ist.

Die Schraube formt sich im inneren Teil des Dübels ein Gegengewinde, wobei sie das Dübelmaterial plastisch verformt und zusätzlich radial nach außen verdrängt, sie spreizt den Dübel. Freie Räume bei unebener oder poriger Lochwand werden vom Dübelmaterial ausgefüllt, wobei ein Formschluss gegen Herausziehen aus der Bohrung in der Deckplatte entsteht. Hauptsächlich ist diese Verbindung aber kraft- beziehungsweise reibschlüssig. Die im Dübelmaterial entstehenden Radialkräfte führen vorwiegend zu dessen elastischer radialer Verformung. Die elastischen Kräfte wirken auf die unnachgiebige Deckwand als Normalkraft, die senkrecht dazu eine proportionale Haftreibungskraft zur Folge hat. Der elastische Hohlzylinder zwischen Schraube und Deckwand ist dick genug, dass die Radialkräfte gleichmäßig auf ein eventuell unebenes Loch in der Deckwand verteilt werden. Am äußeren Lochrand nehmen die Radialkräfte stetig ab, sodass die Bohrung in der Deckwand nicht ausfranst oder sich verformt.

Damit wird die Möglichkeit geschaffen, dass ein Dübel lastübertragend in den Innenaufbau der Sandwich-Platte integriert ist, der jedoch nicht tragend mit der nicht-tragenden Mittellage verbunden ist, sondern der diese Mittellage überbrückt, durchgreift und lediglich mit seiner Bodenfläche an der Innenseite der einen Decklage und mit seinen Umfangsflächen an der Innenseite der gegenüberliegenden Decklage befestigt ist.

Eine Ausführungsform der Befestigung eines solchen Dübels im Mittenbereich einer Sandwich-Platte besteht darin, dass der Dübel als Reibschweiß-Dübel ausgebildet ist. Er wird beim Einbau mit einem geeigneten Ultraschallsonator dergestalt in Schwingung versetzt, dass sowohl seine aus Kunststoff bestehende Bodenfläche als auch die Umfangsflächen sich kurzzeitig verflüssigen und damit einen wärmeschmelzenden Haftverbund sowohl an der Innenseite der einen Decklage als auch an der gegenüberliegenden Decklage eingehen. Der Dübel wird also mittels Ultraschall an die Bodenfläche angeschweißt.

Damit wird der Dübel mit einem Reibschweiß-Verfahren im Zwischenraum zwischen den beiden Decklagen, und zwar lastübertragend mit beiden Decklagen verbunden.

Wichtig ist, dass die nicht-tragende Mittellage nicht mehr zur Lastübertragung beiträgt und der Dübel nur noch an den Innenseiten der beiden gegenüberliegenden Decklagen befestigt ist.

Durch Entfall der lastübertragenden Einlagen (nach der US 2010/0135862 A1) kann wesentliches Flächengewicht eingespart werden. Auf die gewichtserhöhenden Einlagen aus einem schweren Holzwerkstoff kann somit verzichtet werden, und die nicht-tragende Mittellage ist aus einem sehr leichten Werkstoff ausgebildet, wie z. B. einem geschäumten Kunststoff, einem Styropor, einer Wabenstruktur aus Zellulose oder Kunststoffmaterial und dergleichen mehr.

Bei der Einbringung von lastübertragenden Dübeln, welche jeweils kraftschlüssig die beiden Decklagen miteinander verbinden, ergibt sich eine stabile Überbrückung der beiden Decklagen und damit eine günstige Abstandshaltung zwischen den Decklagen, die durch den jeweiligen Dübel selbst erbracht wird. Der Dübel wirkt demnach als lastübertragender Abstandshalter zwischen den Decklagen.

Statt der Verwendung eines im Reibschweiß-Verfahren angebrachten Dübels können auch andere Befestigungsverfahren für einen solchen Dübel verwendet werden. Der Dübel kann stattdessen mit einem aushärtbaren Zwei-Komponenten-Kunststoff oder einem wärmeschmelzbaren Kleber an den beiden einander gegenüber liegenden Decklagen befestigt werden. Es können auch die drei beschriebenen Befestigungsarten untereinander kombiniert werden.

Problem ist nun, dass die Längskanten des Leichtbau-Formteils nach dem Einbau des oder der Dübel in nachteiliger Weise nicht mehr biegesteif sind. Weil sich die nicht-tragende Mittellage bis zu den Längskanten des Leichtbau-Formteils erstreckt. Dort besteht das Problem, dass in diesem Bereich eine Versteifung geschaffen werden muss, um zu vermeiden, dass die Längskanten des Leichtbau-Formteils zusammengedrückt werden.

Hier sieht die Erfindung nach dem Patentanspruch 1 vor, dass im Bereich der Längskanten eine tragende Profilabdeckung angeordnet ist, welche die beiden Decklagen stirnseitig miteinander tragend verbindet, so dass eine Zusammendrückung der beiden im Abstand zueinander angeordneten parallelen Decklagen im Längskantenbereich vermieden wird.

In einer bevorzugten Ausgestaltung der Erfindung ist es vorgesehen, dass die Überbrückung der Längskanten durch ein Abdeckprofil erfolgt, welches mindestens im Bereich einer Faltkante werkstoffeinstückig mit einer Decklage verbunden ist und welches im Bereich dieser Faltkante biegbar oder schwenkbar ist, so dass es zur Schließung der Längsbekantung einfach um 90° verschwenkt wird, so dass damit eine absolut sichere, lastübertragende Überbrückung der Längsbekantungen gegeben ist.

Die Erfindung ist nicht auf die Anordnung eines einseitig über eine Faltkante mit der einen Decklage verbundenen Abdeckprofils beschränkt.

In einer anderen Ausgestaltung der Erfindung kann es vorgesehen sein, dass das Abdeckprofil nicht einseitig über eine Faltkante mit der Decklage verbunden ist, sondern dass das Abdeckprofil als separates Profilstück zur Überbrückung der Längsbekantung auf diese Längsbekantung aufgesetzt und verschweißt oder verklebt wird.

In einer bevorzugten Ausgestaltung ist es jedoch vorgesehen, dass das Abdeckprofil einseitig schwenkbar mit der einen Decklage verbunden ist und über die genannte Faltkante schwenkbar mit dieser Decklage verbunden ist.

Damit ergibt sich der weitere Vorteil, dass mit einem geeigneten Fräser, der ein besonderes Fräsprofil aufweist, in einem einzigen Arbeitsgang möglich ist, das Abdeckprofil aus dem Profil der Sandwich-Platte herauszufräsen. Die schon hergestellten Sandwich-Platten können somit in Verarbeitungsrichtung eine geeignete Fräsmaschine durchlaufen, die entlang der Arbeitsrichtung die Längsbekantung mittels Bearbeitung mit dem Fräskopf öffnet und das einseitig an dem Deckprofil angeordnete Abdeckprofil herausarbeitet.

Dies geschieht in einem einzigen Arbeitsgang und ist daher besonders einfach und kostengünstig.

Nach dem Herausfräsen des Abdeckprofils aus dem einen Deckprofil reicht es dann aus, nur noch dieses Abdeckprofil um seine Faltkante um 90° zu verschwenken und mit den geeigneten Klebemitteln mit der Stirnseite des anderen, gegenüberliegenden Deckprofils zu verbinden, um so die Längskante zu schließen.

Mit einer solchen Anordnung wird der Vorteil erreicht, dass in einem einzigen Arbeitsgang ein tragendes, die Stirnseiten ausbildendes Abdeckprofil geschaffen wird, welches aus dem Material der Deckplatte besteht und welches somit lastübertragend die Längskante überbrückt, so dass diese nicht mehr zusammendrückbar ist.

Damit ergibt sich erstmals die Möglichkeit, dass man nunmehr die nicht-tragende, aus einem relativ weichen und zusammendrückbaren Material bestehende Mittellage bis zu den Längskanten (und natürlich auch zu den Querkanten) der Sandwich-Platte führen kann, die somit das Leichtbau-Formteil bevorzugt über ihre gesamte Fläche mit der nicht-tragenden Mittellage ausgefüllt ist.

In einer bevorzugten Ausgestaltung der Erfindung ist es im Übrigen vorgesehen, dass das Abdeckprofil nicht flach ausgebildet ist, sondern eine bestimmte - eine vergrößerte Fläche aufweisende - Profilfläche aufweist, die aufgrund ihrer vergrößerten Fläche eine vergrößerte Klebefläche ausbildet, so dass es nun auch erstmals möglich ist, im Bereich dieser verbreiterten Profilfläche eine vergrösserte Klebefläche zum Ankleben eines Kantenumleimers auszubilden.

Damit wird erstmals die Möglichkeit geschaffen, dass anstatt einer schmalen Längskantenabdeckung eine profilierte Längskantenabdeckung geschaffen wird, die eine vergrößerte Profilfläche aufweist, so dass auf die vergrößerte Profilfläche der Kantenumleimer besonders gut haftet und von der Stirnseite her nicht mehr abgepellt werden kann.

Aufgrund dieser vergrößerten Klebefläche wird somit eine verbesserte Haftung des Kantenumleimers geschaffen, und damit eine bessere Qualität der Sandwich-Platte an der Kantenseite ermöglicht, weil es aufgrund der kantenseitig verbesserten und vergrößerten Klebefläche nicht mehr möglich ist, dass der Kantenumleimer von der Stirnseite her abgepellt wird.

Somit kann eine Sandwich-Platte im Bereich einer Fertigungsstraße durch nacheinander geschaltete Fertigungsstationen hergestellt werden, weil es nach der Fräsbearbeitung der Längsbekantungen ausreicht, die dort einseitig mit der einen Deckplatte verbundenen Abdeckprofile umzuschlagen und mit der Stirnseite durch eine Verklebung zu verbinden, wonach darauf folgend der Kantenumleimer aufgebracht wird.

Damit wird ein sehr leichtes Leichtbau-Formteil in der Art einer Sandwich-Platte geschaffen, bei der die lastübertragenden Stellen durch Dübel geschaffen sind und auf gewichtserhöhende Einlagen im Zwischenbereich zwischen den Decklagen verzichtet werden kann.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:

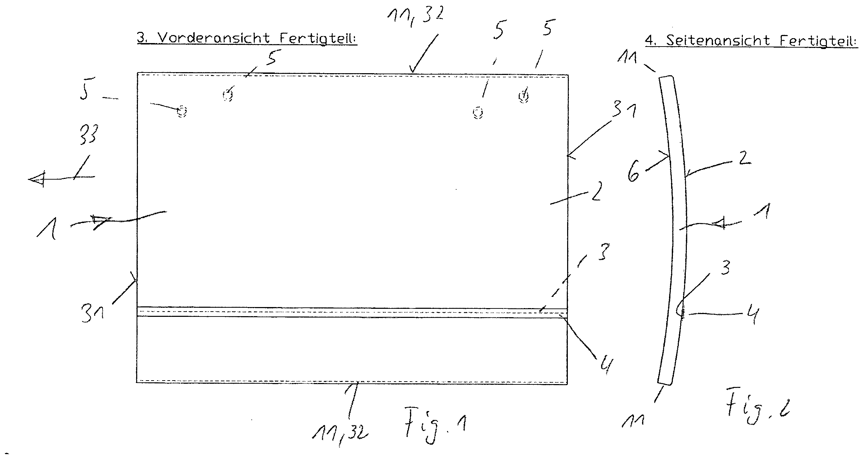

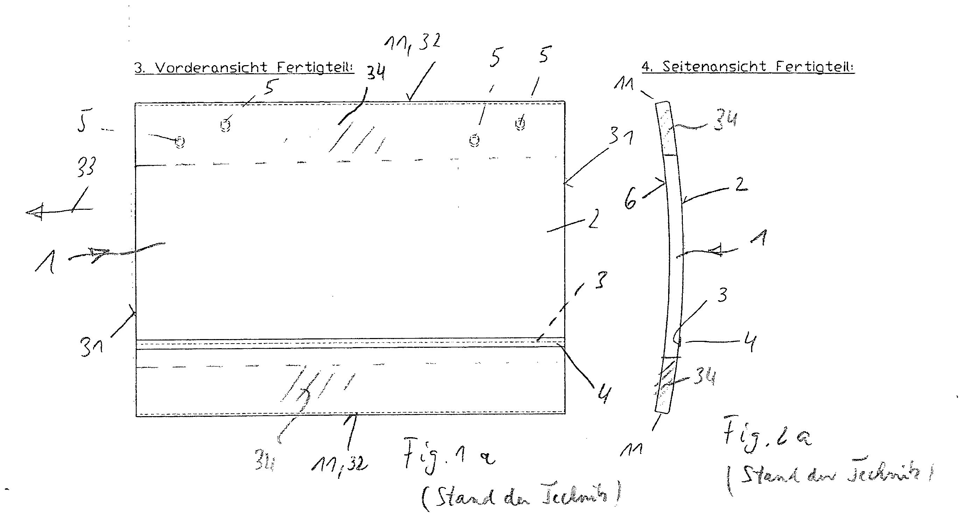

- Figur 1:: eine Draufsicht auf die Sichtseite einer Sandwich-Platte nach der Erfindung
- Figur 1 a:: die gleiche Draufsicht wie Figur 1 bei einem Leichtbau-Formteil nach dem Stand der Technik
- Figur 2:: eine Stirnansicht der Figur 1,
- Figur 2 a:: die gleiche Stirnansicht wie Figur 2 bei einem Leichtbau-Formteil nach dem Stand der Technik, wobei zur besseren Verdeutlichung gegenüber dem Stand der Technik Einlagen eingezeichnet sind, die jedoch nicht zur Erfindung gehören und die erfindungsgemäß wegfallen

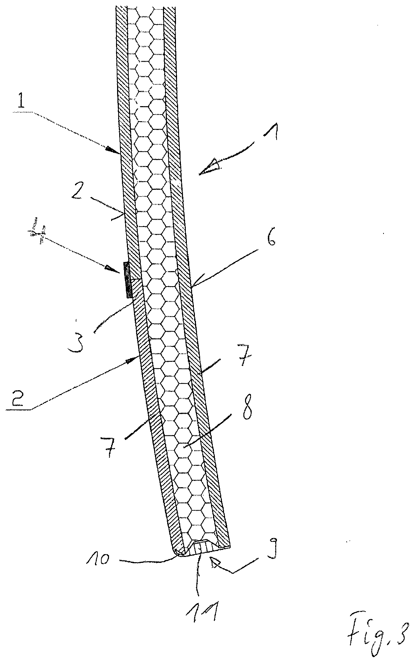

- Figur 3:: ein vergrößerter Schnitt durch die Sandwich-Platte nach Figur 1

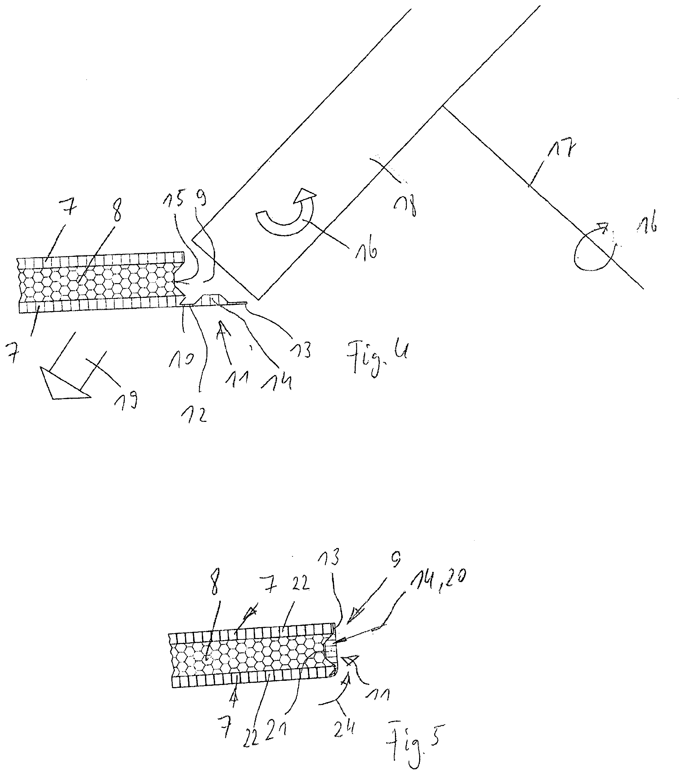

- Figur 4:: schematisiert die Fräsbearbeitung der Längskanten der Sandwich-Platte mit einem geeigneten Fräser
- Figur 5:: das Kantenprofil der Sandwich-Platte im Längskantenbereich im Schnitt als Folgeschritt nach der Bearbeitung nach Figur 4

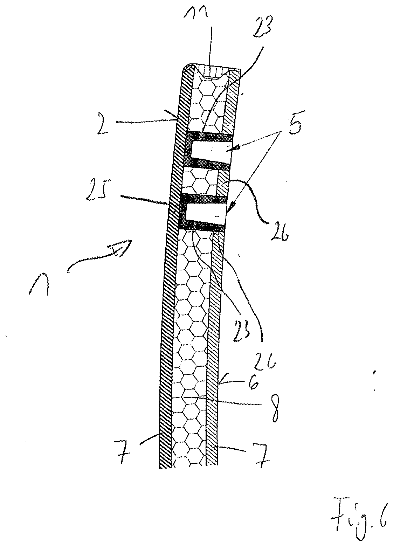

- Figur 6:: die Art der Anwendung von lastübertragenden Dübeln im Aufbau der Sandwich-Platte

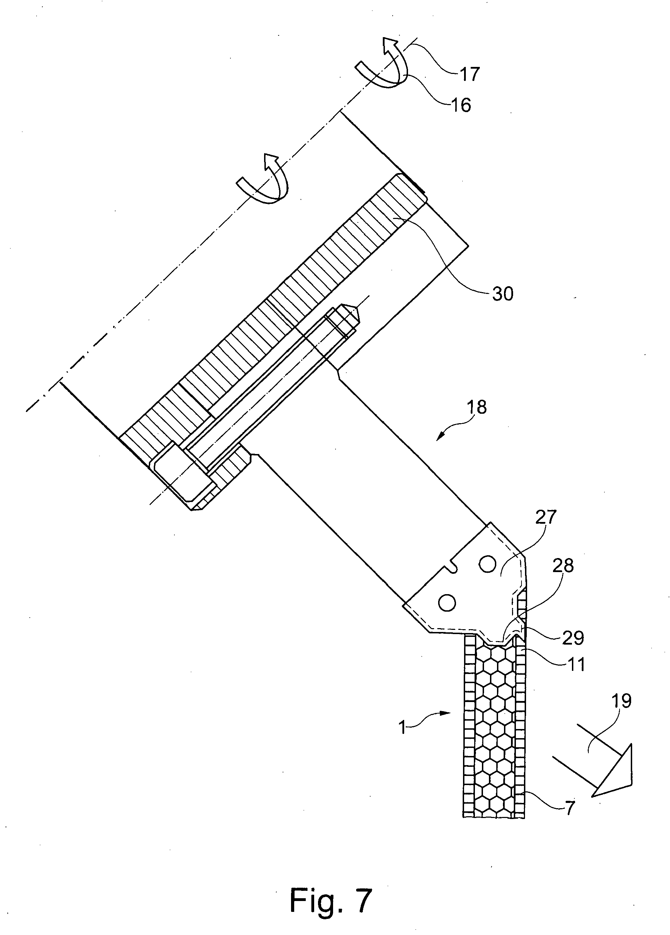

- Figur 7:: die Ansicht eines Fräskopfes, der in einem einzigen Arbeitsgang eine Längskantenbearbeitung unter Herstellung eines Abdeckprofils schafft

Die Figuren 1 und 2 zeigen eine Sandwich-Platte, die im Wesentlichen aus zwei einen gegenseitigen Abstand zueinander einnehmenden Deckplatten 7 besteht, zwischen denen eine nicht-tragende Mittellage 8 aus einem zusammendrückbaren Werkstoff, wie z. B. einem Kunststoffschaum, einer Wabenstruktur oder dergleichen angeordnet ist.

In einer bevorzugten Ausgestaltung hat die Sandwich-Platte z. B. eine Dicke von 15 mm und jede Deckplatte 7 hat eine Dicke von 3 mm, so dass die Mittellage etwa 9 mm aufweist.

Das Material der Deckplatte ist einlagiger Kunststoff. Es kann sich jedoch auch um einen Kunststoff-Verbundwerkstoff handeln, bei dem eine Lage von Kunststoff mit zusätzlichen Deck- oder Dekorfolien abgedeckt ist. Statt eine Kunststoffplatte können auch Echtholzplatten, Furniere, Leichtmetall-Werkstoffe oder Verbundkonstruktionen aus einem oder mehren der genannten Materialien vorgesehen werden.

Im gezeigten Ausführungsbeispiel ist die Sandwich-Platte 1 als gebogene Leichtbauplatte dargestellt und weist eine vordere Sichtseite 2 und eine hintere Rückseite 6 auf, wobei im Bereich der Sichtseite als Ausführungsbeispiel noch dargestellt ist, dass eine Stoßfuge 3 vorhanden ist, die durch einen Abdeckkeder 4 abgedeckt ist.

Es handelt sich lediglich um eine optische Designvariante, weil die Stoßfuge 3 im Bereich der Sichtseite angeordnet ist und mit einem Abdeckkeder 4 abgedeckt ist.

Eine solche Stoßfuge 3 kann entstehen, wenn die Sichtseite der Deckplatte 7 nicht durchgehend ausgebildet ist, sondern im Bereich der Stoßfuge 3 mit einer daran anschließenden Deckplatte zusammenstößt. In diesem Fall muss die hierdurch entstehende Stoßfuge 3 lastübertragend mit einem Abdeckkeder 4 überbrückt werden, um eine unzulässige Öffnung der Stoßfuge 3 bei Belastung der Sandwich-Platte zu vermeiden.

Nach Figur 1 hat die Sandwich-Platte 1 einander gegenüberliegende in Längsrichtung gerichtete Längsbekantungen 32, und die Verarbeitungsrichtung 33 ist als Beispiel von links nach rechts gehend eingezeichnet.

Es sind senkrecht zu den Längsbekantungen 32 links- und rechtsseitig angeordnete Querbekantungen 31 vorgesehen.

Zur lastübertragenden Anbringung von nicht dargestellten Beschlägen oder dergleichen ist erfindungsgemäß vorgesehen, dass im oberen Bereich der Sandwich-Platte 1 Aufnahmebohrungen 5 angeordnet sind, die durch Dübel 23 gebildet sind, deren Funktion anhand der späteren Figur 6 noch erläutert werden wird.

Wichtig ist nach Figur 1a und 2a, dass die zum Stand der Technik gehörenden Einlagen 34 nunmehr entfallen können. Diese Einlagen 34 sollen demnach nur den Stand der Technik illustrieren, und sie entfallen erfindungsgemäß vollständig, so dass vorgesehen ist, dass der Zwischenraum zwischen den beiden einen gegenseitigen Abstand zueinander einnehmenden Deckplatten 7 durch eine nichttragende, zusammendrückbare Mittellage 8 gebildet ist.

Durch den Wegfall der zum Stand der Technik gehörenden Einlagen 34 nach Figur 1a und 2a kann somit das Flächengewicht der gesamten Sandwich-Platte 1 entscheidend vermindert werden, weil die schweren, lastübertragenden Einlagen 34 entfallen können.

Die Figur 3 zeigt einen vergrößerten Schnitt durch die Anordnung nach Figur 2, wo erkennbar ist, dass die Stoßfuge 3 durch den Abdeckkeder 4 überbrückt ist, und ferner ist erkennbar, dass die Längsbekantung 32 auf beiden Stirnseiten 9 durch ein Abdeckprofil 11 gebildet ist, das schwenkbar über eine Faltkante 10 mit der vorderen, sichtseitigen Deckplatte 7 verbunden ist.

Hierauf ist die Erfindung jedoch nicht beschränkt. Es kann auch vorgesehen sein, dass die Faltkante 10, welche den Werkstoffverbund mit der vorderen, sichtseitigen Deckplatte 7 bildet, stattdessen an der rückseitigen Deckplatte 7 angeordnet ist.

Somit kann es vorgesehen sein, dass das Profil 11 entweder mit der sichtseitigen Deckplatte 7 oder mit der rückseitigen Deckplatte 7 verbunden ist.

Die Figur 4 zeigt als Beispiel für eine bevorzugte Bearbeitung einen in Drehrichtung 16 um die Drehachse 17 drehend angetriebenen Fräser 18, dessen Fräskopf nunmehr die Längsbekantung 32 in einem Stück ausfräst, indem er in der Verarbeitungsrichtung 33 entlang der Längsbekantung 32 an der Sandwich-Platte vorbeifährt.

Er wird in Pfeilrichtung 19 schräg gegen die Stirnseite 9 der Sandwich-Platte 1 gelenkt, und die Art des Fräskopfes ist in Figur 7 dargestellt.

Die Bearbeitung erfolgt dergestalt, dass aus der Längskante der Sandwich-Platte das Material so heraus gearbeitet wird, dass sich ein Abdeckprofil 11 ergibt, welches werkstoffeinstückig mit dem der einen Deckplatte 7 verbunden ist und mit dieser über eine Faltkante 10 werkstoffeinstückig verbunden ist.

Wichtig ist, dass das Abdeckprofil 11 nicht als schmaler Streifen ausgebildet ist, sondern etwa im Mittenbereich eine vergrößerte Profilfläche 14 aufweist, an die sich jeweils randseitig ein schmaleres Stegprofil 13 anschließt.

Im Zwischenbereich zwischen zwei schmaleren Stegprofilen 12, 13 ist somit eine Profilfläche 14 mit einer vergrößerten Klebefläche ausgebildet.

Wenn nun das Abdeckprofil 11 gemäß Figur 4 hergestellt wurde, wird es gemäß Figur 5 in Pfeilrichtung 24 um 90° verschwenkt, so dass das vorherige Konterprofil 15 im Bereich der Stirnseite 9 der Sandwichplatte 1 nunmehr vollständig lastübertragend abgedeckt ist. Das Abdeckprofil 11 wird dann im Bereich des Stegprofils 13 durch eine Klebe- oder Schweißverbindung mit der Stirnseite des einen Deckprofils 7 verbunden.

Ebenso kann es innenseitig noch im Bereich der Klebeflächen 21 mit der nicht-tragenden Mittenlage 8 verbunden werden.

Wichtig ist nun, dass aufgrund des Vorhandenseins der vergrößerten Profilfläche 14 eine vergrößerte Klebefläche 20 gebildet ist, so dass ein Kantenumleimer auf die Klebeflächen 22 der Deckplatten 7 aufgeklebt wird und stirnseitig eine vergrößerte Klebefläche 20 im Bereich der Profilfläche 14 vorfindet.

Wegen dieser stirnseitig verstärkten Klebefläche ist es daher schwierig oder sogar unmöglich, den Kantenumleimer stirnseitig von der Klebefläche 14 abzupellen. Dies ist ein wesentlicher Vorteil gegenüber dem Stand der Technik, bei dem eine vergrößerte Profilfläche 14 fehlte.

Damit wird die Qualität der Kantenumleimung einer solchen Sandwich-Platte wesentlich verbessert.

Weiterer Vorteil der Erfindung ist, dass das Abdeckprofil 11 aus dem Material der relativ steifen Deckplatte 7 gebildet ist, so dass damit eine lastübertragende Verbindung zwischen der einen Deckplatte 7 und der gegenüberliegenden Deckplatte 7 geschaffen wird. Damit wird verhindert, dass die beiden Deckplatten im Stirnseitenbereich zusammengedrückt werden können, weil dies durch das tragende Abdeckprofil 11 im Stirnseitenbereich gemäß Figur 5 vermieden wird.

Wenn nun gemäß der Erfindung eine hochlastübertragende Verbindung durch das Abdeckprofil 11 im Stirnseitenbereich der Sandwich-Platte 1 geschaffen ist, ist es nun ohne Weiteres möglich, in den nicht-tragenden Aufbau der Mittellage 8 lastübertragende Dübel 23 einzusetzen.

Hierbei ist wichtig, dass die Dübel z. B. von der Rückseite 6 her in zugeordnete Aufnahmebohrungen 5 der Deckplatte 7 eingesetzt sind und diese Aufnahmebohrungen 5 formschlüssig ausfüllen, und ferner ist wesentlich, dass deren Bodenfläche 25 auf der Innenseite der sichtseitigen Deckplatte 7 aufsitzt.

Wenn nun ein derartiger Dübel 23 durch ein Reibschweißverfahren befestigt wird, kommt es kurzzeitig zu einer wärmeschmelzbaren Verflüssigung des Materials des Dübels 23 im Bereich der Bodenfläche 25 und im Umfangsbereich der rückseitigen Deckplatte 7, so dass der Dübel 23 lastübertragend die beiden Deckplatten 7 überbrückt und keine tragende Verbindung mit der nicht-tragenden Mittellage 8 aufweist.

Somit ist gezeigt, dass auf die gewichtserhöhenden Einlagen 34 verzichtet werden kann und trotzdem hochlastübertragende Befestigungspunkt durch Verwendung von Dübeln 23 werden können.

Ferner ist nachgewiesen, dass aufgrund der dadurch sich ergebenden Zusammendrückung der beiden Deckplatten 7 nunmehr eine lastübertragende Überbrückung der Längsseiten durch das erfindungsgemäße Abdeckprofil 11 erfolgt.

Der Dübel 23 ist somit mit seiner Bodenfläche 25 mit der Innenseite der sichtseitigen Deckplatte 7 befestigt und mit seiner Haltefläche 26, die im Umfangsbereich des Dübels 23 angeordnet ist, im Bereich der Aufnahmebohrung 5 in der rückseitigen Deckplatte 7 befestigt.

Selbstverständlich ist die Erfindung nicht auf die Einbaustellung nach Figur 6 beschränkt. Es können alle Teile gegeneinander ausgetauscht werden. Die vorher als sichtseitige Deckplatte 7 bezeichnete Deckplatte kann auch die rückseitige Deckplatte sein, so dass es möglich ist, die Dübel 23 auch mit nach vorne zur Sichtseite hin geöffneten Aufnahmebohrungen 5 auszubilden.

Die Figur 7 zeigt einen erfindungsgemäßen Fräskopf 27, der mittels einer Profilspitze 29 ein besonderes Fräsprofil 28 dergestalt erzeugt, dass in einem einzigen Fräsarbeitsgang das Abdeckprofil 11 aus dem Material der einen Deckplatte 7 herausgearbeitet wird und lediglich nur noch über eine Faltkante 10 mit dieser Deckplatte 7 verbunden bleibt. Der Fräskopf 27 wird in Pfeilrichtung 19 gegen das Profil geführt und gleichzeitig auch in senkrechte Richtung zur Zeichenebene Figur 7 bewegt.

### Zeichnungslegende

- 1: Sandwich-Platte
- 2: Sichtseite
- 3: Stoßfuge
- 4: Abdeckkeder
- 5: Aufnahmebohrung
- 6: Rückseite
- 7: Deckplatte
- 8: Mittellage
- 9: Stirnseite
- 10: Faltkante
- 11: Abdeckprofil
- 12: Stegprofil
- 13: Stegprofil
- 14: Profilfläche
- 15: Konterprofil
- 16: Drehrichtung
- 17: Drehachse
- 18: Fräser
- 19: Pfeilrichtung
- 20: Klebefläche
- 21: Klebefläche
- 22: Klebefläche
- 23: Dübel
- 24: Pfeilrichtung
- 25: Bodenfläche (von 23)
- 26: Haltefläche
- 27: Fräskopf
- 28: Fräskopf
- 29: Profilspitze
- 30: Antriebswelle
- 31: Querbekantung
- 32: Längsbekantung
- 33: Verarbeitungsrichtung
- 34: Einlage (Stand der Technik)

## Patentansprüche

1. Formteil für die Verwendung im Leichtbau in Sandwich-Bauweise, bei dem eine Sandwich-Platte (1) aus zwei zueinander parallelen Deckplatten (7) besteht, zwischen denen mindestens teilweise eine nicht-tragende Mittellage (8) angeordnet ist und eine oder mehreren Aufnahmebohrungen (5) für die lastübertragende Befestigung von Beschlägen oder dgl. angeordnet sind, wobei sich die nicht-tragende Mittellage (8) bis zu den Längskanten (32) der Sandwich-Platte (1) über deren gesamten Fläche hinweg erstreckt, und die Aufnahmebohrungen (5) durch Dübel (23) gebildet sind, welche lastübertragend mit beiden Deckplatten (7) verbunden sind, **dadurch gekennzeichnet, dass** an der Stirnseite (9) zwischen den beiden Deckplatten (7) im Bereich deren Längskanten (32) ein tragendes Abdeckprofil (11) angeordnet ist, welches die beiden Decklagen (7) stirnseitig tragend miteinander verbindet und dass das Abdeckprofil (11) mindestens im Bereich einer Faltkante (10) werkstoffeinstückig mit einer Decklage (7) biegbar oder schwenkbar verbunden ist.

2. Formteil für die Verwendung im Leichtbau nach Anspruch 2, **dadurch gekennzeichnet, dass** das Abdeckprofil (11) zur Schließung der Längsbekantung um 90° verschwenkbar ist, so dass eine lastübertragende Überbrückung der Längsbekantungen gegeben ist.

3. Formteil für die Verwendung im Leichtbau nach Anspruch 1 oder 2, **dadurch gekennzeichnet, dass** das Abdeckprofil (11) mit einem Klebemittel mit der Stirnseite des anderen, gegenüberliegenden Deckprofils verbindbar ist, um die Längskante zu schließen.

4. Formteil für die Verwendung im Leichtbau nach Anspruch 1 oder 2, **dadurch gekennzeichnet, dass** das Abdeckprofil (11) mit einer Schweißverbindung mit der Stirnseite des anderen, gegenüberliegenden Deckprofils verbindbar ist, um die Längskante zu schließen.

5. Formteil für die Verwendung im Leichtbau nach einem der Ansprüche 1 bis 4, **dadurch gekennzeichnet, dass** das Abdeckprofil (11) eine vergrößerte Profilfläche (14) aufweist, die eine vergrößerte Klebefläche ausbildet.

6. Formteil für die Verwendung im Leichtbau nach einem der Ansprüche 1 bis 5, **dadurch gekennzeichnet, dass** die nicht-tragende Mittellage (8) aus einem geschäumten Kunststoff, oder einem Styropor oder einer Wabenstruktur aus Zellulose oder aus Kunststoffmaterial besteht und ein niedrigeres Flächengewicht im Vergleich zum Flächengewicht der Deckplatten (7) aufweist.

7. Formteil für die Verwendung im Leichtbau nach einem der Ansprüche 1 bis 6, **dadurch gekennzeichnet, dass** die beiden Deckplatten (7) aus dem gleichen Material mit gleicher Dicke bestehen.

8. Formteil für die Verwendung im Leichtbau nach einem der Ansprüche 1 bis 7, **dadurch gekennzeichnet, dass** die beiden Deckplatten (7) aus dem gleichen Material mit unterschiedlicher Dicke bestehen

9. Formteil für die Verwendung im Leichtbau nach einem der Ansprüche 1 bis 8, **dadurch gekennzeichnet, dass** die beiden Deckplatten (7) aus einem ein- oder mehrlagigen Kunststoffmaterial oder aus Echtholz, Furnier oder Leichtmetall-Werkstoff bestehen

10. Verfahren zur Herstellung eines Formteils für die Verwendung im Leichtbau nach Anspruch 1 in Sandwich-Bauweise, bei dem eine Sandwich-Platte (1) aus zwei zueinander parallelen Deckplatten (7) besteht, zwischen denen mindestens teilweise eine nicht-tragende Mittellage (8) angeordnet ist und eine oder mehreren Aufnahmebohrungen (5) für die lastübertragende Befestigung von Beschlägen oder dgl. angeordnet sind, **dadurch gekennzeichnet, dass** mit einem geeigneten Fräser, der ein besonderes Fräsprofil aufweist, in einem einzigen Arbeitsgang das Abdeckprofil (11) aus dem Profil der Sandwich-Platte (1) heraus gefräst wird.

11. Verfahren nach Anspruch 10, **dadurch gekennzeichnet, dass** die Sandwich-Platte (1) in Verarbeitungsrichtung eine Fräsmaschine durchlaufen, die entlang der Arbeitsrichtung die Längsbekantung (32) mittels Bearbeitung mit dem Fräskopf (27, 28) öffnet und das einseitig an dem Deckprofil angeordnete Abdeckprofil (11) herausarbeitet.

12. Verfahren nach einem der Ansprüche 10 oder 11, **dadurch gekennzeichnet, dass** nach dem Herausfräsen des Abdeckprofils (11) aus dem einen Deckprofil (7) das Abdeckprofil (11) um seine Faltkante um 90° verschwenkt wird und mit geeigneten Klebemitteln mit der Stirnseite des gegenüberliegenden Deckprofils (7) zu verbinden, um so die Längskante (32) zu schließen.

13. Verfahren nach einem der Ansprüche 10 bis 12, **dadurch gekennzeichnet, dass** in einem einzigen Arbeitsgang ein tragendes, die Stirnseiten ausbildendes Abdeckprofil (11) geschaffen wird, welches aus dem Material der Deckplatte (1) besteht und welches lastübertragend die Längskante überbrückt, so dass diese nicht mehr zusammendrückbar ist.

## Claims

1. Moulded part for use in lightweight construction in sandwich design, in which a sandwich panel (1) consists of two surface panels (7) which are parallel to one another, and between which at least partly a non-supporting central layer (8) is arranged and one or more receiving bores (5) for the load-transmitting attachment of fittings or the like are arranged, wherein the non-supporting central layer (8) extends away as far as the longitudinal edges (32) of the sandwich panel (1) over its entire surface, and the receiving bores (5) are formed by dowels (23) which are connected to both surface panels (7) in load-transmitting manner, **characterised in that** a supporting cover profile (11), which connects the two surface layers (7) to one another in supporting manner on the end-face side, is arranged on the end-face side (9) between the two surface panels (7) in the region of their longitudinal edges (32), and **in that** the cover profile (11) is connected in one material piece to a surface layer (7) to be bendable or pivotable at least in the region of a folding edge (10).

2. Moulded part for use in lightweight construction according to claim 1, **characterised in that** the cover profile (11) can be pivoted about 90° to close the longitudinal edging so that load-transmitting bridging of the longitudinal edgings is provided.

3. Moulded part for use in lightweight construction according to claim 1 or 2, **characterised in that** the cover profile (11) can be connected to the end-face side of the other, opposite surface profile using an adhesive in order to close the longitudinal edge.

4. Moulded part for use in lightweight construction according to claim 1 or 2, **characterised in that** the cover profile (11) can be connected to the end-face side of the other, opposite surface profile using a weld connection in order to close the longitudinal edge.

5. Moulded part for use in lightweight construction according to one of claims 1 to 4, **characterised in that** the cover profile (11) has an enlarged profile surface (14) which forms an enlarged adhesive surface.

6. Moulded part for use in lightweight construction according to one of claims 1 to 5, **characterised in that** the non-supporting central layer (8) consists of a foamed plastic, or a polystyrene or a honeycomb structure of cellulose or of plastic material and has a lower weight per unit area compared to the weight per unit area of the surface panels (7).

7. Moulded part for use in lightweight construction according to one of claims 1 to 6, **characterised in that** the two surface panels (7) consist of the same material with the same thickness.

8. Moulded part for use in lightweight construction according to one of claims 1 to 7, **characterised in that** the two surface panels (7) consist of the same material with different thickness.

9. Moulded part for use in lightweight construction according to one of claims 1 to 8, **characterised in that** the two surface panels (7) consist of a single-layer or multi-layer plastic material or of real wood, veneer or light metal material.

10. Method for manufacturing a moulded part for use in lightweight construction according to claim 1 in sandwich design, in which a sandwich panel (1) consists of two surface panels (7) which are parallel to one another, and between which at least partly a non-supporting central layer (8) is arranged and one or more receiving bores (5) for the load-transmitting attachment of fittings or the like are arranged, **characterised in that** using a suitable milling cutter, which has a particular milling profile, the cover profile (11) is milled out from the profile of the sandwich panel (1) in a single working step.

11. Method according to claim 10, **characterised in that** the sandwich panel (1) in the processing direction passes through a milling machine, which along the working direction opens the longitudinal edging (32) by means of processing using the milling head (27, 28) and carves out the cover profile (11) arranged on one side of the surface profile.

12. Method according to one of claims 10 or 11, **characterised in that** after milling out the cover profile (11) from the one surface profile (7), the cover profile (11) is pivoted by 90° about its folding edge and to connect to the end-face side of the opposite surface profile (7) using suitable adhesives in order to thus close the longitudinal edge (32).

13. Method according to one of claims 10 to 12, **characterised in that** in a single working step, a supporting cover profile (11) forming the end-face sides is provided which consists of the material of the surface panel (1) and which bridges the longitudinal edge in load-transmitting manner so that the latter can no longer be compressed.

## Revendications

1. Pièce moulée pour une utilisation dans la construction légère à structure sandwich, pour laquelle une plaque sandwich (1) se compose de deux plaques extérieures parallèles (7) entre lesquelles est disposée au moins en partie une âme non porteuse (8) et sont disposés un ou plusieurs perçages de réception (5) pour la fixation avec transmission de charge de ferrures ou autres, l'âme non porteuse (8) s'étendant jusqu'aux bords longitudinaux (32) de la plaque sandwich (1) sur toute la surface de celle-ci, et les perçages de réception (5) étant formés par des chevilles (23) qui sont reliées avec une transmission de charge aux deux plaques extérieures (7),
**caractérisée en ce qu'**il est prévu sur le côté frontal (9), entre les deux plaques extérieures (7), dans la zone des bords longitudinaux (32) de celles-ci, un profilé de recouvrement porteur (11) qui relie de manière porteuse, côté frontal, les deux couches extérieures (7), et **en ce que** ledit profilé de recouvrement (11), au moins dans la zone d'un bord de pliage (10), est relié d'une seule pièce à une couche extérieure (7) en pouvant être plié ou pivoter.

2. Pièce moulée pour une utilisation dans la construction légère selon la revendication 1, **caractérisée en ce que** le profilé de recouvrement (11) est apte à pivoter de 90° pour fermer le bord longitudinal, ce qui relie, avec une transmission de charge, les bords longitudinaux.

3. Pièce moulée pour une utilisation dans la construction légère selon la revendication 1 ou 2, **caractérisée en ce que** le profilé de recouvrement (11) est apte à être relié à l'aide d'un adhésif au côté frontal de l'autre profilé de recouvrement, opposé, afin de fermer le bord longitudinal.

4. Pièce moulée pour une utilisation dans la construction légère selon l'une des revendications 1 ou 2, **caractérisée en ce que** le profilé de recouvrement (11) est apte à être relié à l'aide d'une liaison soudée au côté frontal de l'autre profilé de recouvrement, opposé, afin de fermer le bord longitudinal.

5. Pièce moulée pour une utilisation dans la construction légère selon l'une des revendications 1 à 4, **caractérisée en ce que** le profilé de recouvrement (11) présente une surface profilée agrandie (14) qui forme une surface de collage agrandie.

6. Pièce moulée pour une utilisation dans la construction légère selon l'une des revendications 1 à 5, **caractérisée en ce que** l'âme non porteuse (8) se compose d'une matière plastique expansée ou d'un polystyrène ou d'une structure alvéolaire en cellulose ou d'une matière plastique, et présente un poids par unité de surface qui est inférieur à celui des plaques extérieures (7).

7. Pièce moulée pour une utilisation dans la construction légère selon l'une des revendications 1 à 6, **caractérisée en ce que** les deux plaques extérieures (7) se composent du même matériau de même épaisseur.

8. Pièce moulée pour une utilisation dans la construction légère selon l'une des revendications 1 à 7, **caractérisée en ce que** les deux plaques extérieures (7) se composent du même matériau d'épaisseurs différentes.

9. Pièce moulée pour une utilisation dans la construction légère selon l'une des revendications 1 à 8, **caractérisée en ce que** les deux plaques extérieures (7) se composent d'une matière plastique monocouche ou multicouche, ou de bois véritable, ou d'un matériau en métal léger.

10. Procédé pour la fabrication d'une pièce moulée pour une utilisation dans la construction légère selon la revendication 1 à structure sandwich, selon lequel une plaque sandwich (1) se compose de deux plaques extérieures parallèles (7) entre lesquelles est disposée au moins en partie une âme non porteuse (8) et sont disposés un ou plusieurs perçages de réception (5) pour la fixation avec transmission de charge de ferrures ou autres,
**caractérisé en ce qu'**avec une fraise appropriée qui présente un profil de fraisage spécial, le profilé de recouvrement (11) est fraisé en une seule opération à partir du profilé de la plaque sandwich (1).

11. Procédé selon la revendication 10, **caractérisé en ce que** la plaque sandwich (1) traverse dans le sens d'usinage une fraiseuse qui ouvre le bord longitudinal (32) le long du sens de travail à l'aide de l'usinage avec la tête de fraise (27, 28) et réalise le profilé de recouvrement (11) disposé unilatéralement sur le profilé extérieur.

12. Procédé selon l'une des revendications 10 ou 11, **caractérisé en ce qu'**après le fraisage du profilé de recouvrement (11) à partir d'un profilé extérieur (7), ledit profilé de recouvrement (11) est soumis à un pivotement de 90° sur son bord de pliage, et est relié à l'aide d'adhésifs appropriés au côté frontal du profilé extérieur (7) opposé, afin de fermer ainsi le bord longitudinal (32).

13. Procédé selon l'une des revendications 10 à 12, **caractérisé en ce qu'**en une seule opération est créé un profilé de recouvrement porteur (11) qui forme les côtés frontaux et qui se compose du matériau de la plaque extérieure (1) et couvre avec une transmission de charge le bord longitudinal, de sorte que celui-ci ne peut plus être compressé.
